# FASCICULE DE BREVET EUROPEEN

(11) **EP 1 762 750 B1**
(45) Date de publication et mention de la délivrance du brevet: **14.07.2010**
(21) Numéro de dépôt: 06118829.8
(22) Date de dépôt: 11.08.2006
(51) Int. Cl.: F16F 15/133

(54) **Pièce d'amortissement pour double volant amortisseur**
Anschlagpuffer für ein Zweimassenschwungrad
Damping buffer for a dual-mass flywheel

(30) Priorité: 08.09.2005 FR 0552706
(43) Date de publication de la demande: 14.03.2007
(73) Titulaire: Valeo Embrayages, 80009 Amiens (FR)
(72) Inventeur: Mateus de Jesus, José c/o VALEO EMBRAYAGES SAS, 80000 Amiens (FR)
(74) Mandataire: Lemaire, Marc

(56) Documents cités:
- DE-A1- 3 832 955
- FR-A- 2 620 502
- US-A- 3 990 324
- US-A- 4 874 350
- US-A- 5 456 634
- US-A1- 2003 000 760
- US-A1- 2003 106 735
- US-B1- 6 386 065
- US-B1- 6 858 675
- PATENT ABSTRACTS OF JAPAN vol. 2003, no. 12, 5 décembre 2003 (2003-12-05) & JP 2005 187772 A (KITAGAWA IND CO LTD), 14 juillet 2005 (2005-07-14)

## Description

L'invention concerne une pièce d'amortissement destinée à un double volant amortisseur et un double volant amortisseur incorporant une telle pièce.

Un double volant amortisseur, en particulier pour véhicule automobile, comprend des volants d'inertie primaire et secondaire coaxiaux, qui sont supportés et centrés l'un sur l'autre au moyen d'un palier, et un amortisseur de torsion, généralement à ressorts, agencé entre les volants pour les relier en rotation avec une possibilité de débattement angulaire entre les deux volants.

En service, les volants primaire et secondaire sont classiquement reliés à un arbre moteur d'un moteur de véhicule automobile et à l'arbre d'entrée d'une boîte de vitesses, en général par l'intermédiaire d'un embrayage, respectivement.

Un tel double volant amortisseur permet d'absorber et d'amortir efficacement les vibrations générées par l'arbre moteur, sans les transmettre au reste du véhicule par l'intermédiaire de la transmission.

Un phénomène de résonance, notamment à une fréquence de résonance entre 10 et 15 Hz, se manifeste au passage par une valeur particulière de la vitesse de rotation de l'arbre moteur, qui est inférieure au régime de ralenti d'un moteur de véhicule automobile et qui se traduit par des oscillations angulaires de grande énergie du volant secondaire, avec un risque de détérioration ou de destruction de la transmission.

Pour éviter ce risque, le double volant amortisseur peut être équipé d'un limiteur de couple, monté en un point quelconque de la chaîne de transmission du couple dans le double volant amortisseur, par exemple dans l'amortisseur de torsion. Le limiteur de couple peut également être intégré dans le volant d'inertie secondaire et agencé entre deux composants annulaires de celui-ci. Le limiteur de couple protège efficacement la transmission au passage par la fréquence de résonance pendant les phases de démarrage et d'arrêt du moteur du véhicule mais est relativement coûteux, ce qui augmente de façon sensible le prix de revient du double volant amortisseur.

On a déjà proposé dans le document FR-A-2620502, un amortisseur de torsion tel qu'un double volant amortisseur dans lequel un insert médian comportant des butées en élastomère ou analogue, est disposé entre deux ressorts d'amortissement.

On a également déjà proposé d'équiper un double volant amortisseur de butées de fin de course en un matériau élastiquement déformable tel que du caoutchouc. De préférence, une butée doit être capable d'absorber au moins 600 à 700 chocs de 15 J, de préférence de 20 J sans s'endommager. Une butée doit également résister à des températures supérieures à 100°C, de préférence supérieures à 120°C, voire 150°C, et à des températures inférieure à -20°C, de préférence inférieures à -40°C. Ces butées sont montées entre les deux volants pour être comprimées en fin de course des oscillations relatives de grande amplitude des volants qui apparaissent au passage par la fréquence de résonance. La faible capacité d'absorption d'énergie des butées actuelles est cependant un frein à leur développement. D'autant que le volume disponible pour loger ces butées, typiquement de l'ordre du centimètre cube par butée, est réduit. Par exemple, un volume de 20 cm³ de caoutchouc naturel est nécessaire pour absorber un choc de 20 J.

Il existe donc un besoin permanent pour une pièce d'amortissement, et notamment pour une butée de fin de course, capable d'absorber une quantité d'énergie supérieure à celle absorbée par les pièces équivalentes actuelles.

Selon l'invention, qui est définie par les caractéristiques techniques de la revendication indépendante 1 de produit, on atteint ce but au moyen d'une pièce d'amortissement destinée à un double volant amortisseur, constituée, au moins en partie, par un matériau élastomère présentant, suivant la norme ASTM D2000 (« Standard Classification System for Rubber Products in Automotive Applications » de ASTM International), une résistance thermique (« résistance to heat aging ») supérieure à 125°C, de préférence supérieure à 150°C, de préférence encore supérieure ou égale à 175°C, et un gonflement dans l'huile (« swelling in oil ») inférieur à 60 %, de préférence inférieur à 50 %, de préférence encore inférieur à 45 %. Dans la suite de la description, sauf indication contraire, « matériau élastomère » désigne ce matériau.

Pour l'homme du métier, les critères de sélection ci-dessus n'apparaissent pas pertinents pour trouver un matériau présentant un capacité d'absorption des chocs élevée. Ils sont en effet classiquement utilisés pour sélectionner des matériaux susceptibles de servir à fabriquer des pièces mises en contact avec de l'huile chaude, par exemple des joints d'étanchéité dans des moteurs. Pourtant, de manière surprenante et inexpliquée, les inventeurs ont constaté que les matériaux répondant à ces critères sont également particulièrement efficaces pour amortir les chocs.

Une utilisation dans une butée de fin de course dans un double volant amortisseur s'est avérée particulièrement efficace.

De préférence, le matériau élastomère est choisi dans le groupe formé par les fluoroélastomères, les caoutchoucs éthylènes acryliques, les élastomères perfluorés, les caoutchoucs acryliques (Acrylic Rubber ou « ACM »), les caoutchoucs nitriles hydrogénés (HNBR) et leur mélanges.

De préférence encore, le matériau élastomère est choisi dans le groupe formé par les produits VITON®, VAMAC®, et KALREZ®. Les produits VITON® et VAMAC® sont préférés, les produits VAMAC® étant préférés entre tous. Avantageusement, une butée d'un volume de 1 cm³ en VAMAC® permet d'absorber plus de 750 chocs d'au moins 20 J. De préférence encore, le VAMAC® est du type VAMAC® G.

VAMAC® désigne un ensemble de matériaux polymères fabriqués par la Société par DuPont P&IP et distribués par la Société Safic-Alcan.

Les produits VAMAC® comprennent des familles de Terpolymères et de Dipolymères. Les performances de chaque produit d'une famille sont fonction du pourcentage d'acrylate de méthyle.

Les VAMAC® Terpolymères (Terpolymère Ethylène Acrylique (AEM)) contiennent des sites carboxyliques qui permettent une vulcanisation par les diamines. Ils comprennent les produits VAMAC® G, VAMAC® HVG, VAMAC® GLS (Low Swell), et VAMAC® GXF.

Les VAMAC® Dipolymères contiennent uniquement de l'éthylène et de l'acrylate de méthyle et sont vulcanisables par les peroxydes. Ils comprennent les produits VAMAC® DP et VAMAC® DHC.

Le Viton® est un fluoroélastomère produit par la Société Dupont Dow Elastomers.

Les produits Kalrez® sont des élastomères perfluorés, notamment utilisés pour des matériaux d'étanchéité. Ces produits comprennent Kalrez® 8002, Kalrez® 6221, Kalrez® Sahara^{™} 8475, Kalrez® Sahara^{™}n Plasma comp. 8575, Kalrez® 6230, Kalrez® Spectrum^{™} 6375, Kalrez® 4079, Kalrez® Spectrum^{™} 7075, Kalrez® 2037, Kalrez® 1050LF, Kalrez® Sahara^{™} 8385, Kalrez® 2035 et Kalrez® 3018.

Les ACM (en anglais « Acrylic Rubber ») désignent de manière générale les caoutchoucs acryliques.

Parmi les caoutchoucs nitriles hydrogénés (HNBR), inventés par la Société Bayer, on connaît en particulier, les produits HNBR 88625, HNBR 886006, HNBR 886008, HNBR 886172, HNBR 886301.

Un amortissement particulièrement bien adapté à un double volant amortisseur est obtenu en alternant le matériau élastomère avec des lames en un matériau plus rigide. De manière générale, la pièce d'amortissement selon l'invention présente de préférence une structure feuilletée comprenant au moins deux couches élastiquement déformables, au moins une desdites couches, de préférence les deux, étant en ledit matériau élastomère, entre lesquelles est interposée au moins une lame en un matériau plus rigide. De préférence, toutes les couches élastiquement déformables de la pièce d'amortissement sont en ledit matériau élastomère. De préférence encore, les couches et le(s) lame(s) sont superposées dans le sens de l'amortissement de fin de course.

De préférence toujours, la structure feuilletée comprend deux couches élastiquement déformables, de préférence en VAMAC®, chaque couche étant de préférence prise en sandwich entre des tôles métalliques. La structure feuilletée présente ainsi la succession de pièces suivante : Tôle - première couche - tôle - deuxième couche - tôle. Une telle disposition permet avantageusement d'amortir des chocs d'au moins 60 J.

Une butée à structure feuilletée présente l'avantage d'avoir une raideur beaucoup plus importante qu'une butée monobloc de même volume, pour une même course de compression. Cette raideur supérieure permet d'amortir des chocs de fin de course de plus grande énergie pour un volume donné de butée. Cela permet notamment d'amortir les chocs de fin de course au passage par la fréquence de résonance dans un double volant amortisseur à ressorts circonférentiels qui n'est pas équipé d'un limiteur de couple.

L'invention concerne également un double volant amortisseur, comprenant des volants d'inertie primaire et secondaire coaxiaux, supportés et centrés l'un sur l'autre au moyen d'un palier, et un amortisseur de torsion agencé entre les volants pour les relier en rotation avec une possibilité de débattement angulaire entre les deux volants. Le double volant amortisseur selon l'invention est caractérisé en ce qu'il comprend au moins une pièce d'amortissement selon l'invention. De préférence, la pièce d'amortissement est une butée agencée entre les volants pour amortir une fin de course d'un débattement angulaire entre les volants.

La butée peut être à action bidirectionnelle, c'est-à-dire coopérer avec les volants d'inertie primaire et secondaire pour chaque sens de rotation d'un volant par rapport à l'autre. Elle peut aussi être à action unidirectionnelle, c'est-à-dire coopérer avec les volants d'inertie primaire et secondaire pour un sens prédéterminé de rotation d'un volant par rapport à l'autre.

De préférence, le double volant selon l'invention comprend plusieurs butées selon l'invention, réparties de façon sensiblement régulière autour de l'axe de rotation des volants. De préférence les butées sont réparties par groupes de deux, chaque groupe comprenant une butée agissant dans un sens de rotation et une butée agissant dans l'autre sens de rotation.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en coupe axiale d'un double volant amortisseur à ressorts circonférentiels équipé de butées de fin de course selon l'invention ;
- les figures 2 et 3 sont des vues schématiques partielles en coupe transversale représentant ces butées de fin de course au repos et en position de service, respectivement ;
- la figure 4 est une vue schématique partielle en coupe axiale d'un double volant amortisseur à ressorts radiaux équipé de butées de fin de course selon l'invention ;
- la figure 5 est une vue schématique partielle en coupe transversale de ce double volant amortisseur ;
- la figure 6 est une vue schématique partielle en coupe selon la ligne VI-VI de la figure 5 ;
- la figure 7 est une vue schématique en coupe axiale d'un double volant amortisseur équipé de butées selon l'invention ;
- les figures 8 et 9 sont des vues schématiques partielles en coupe transversale illustrant le fonctionnement de la butée de la figure 7 ;
- la figure 10 est une vue schématique en coupe transversale du double volant amortisseur de la figure 7 et représente l'agencement des butées de fin de course dans ce double volant amortisseur.

Dans les différentes figures, des références identiques sont utilisées pour désigner des organes identiques ou analogues.

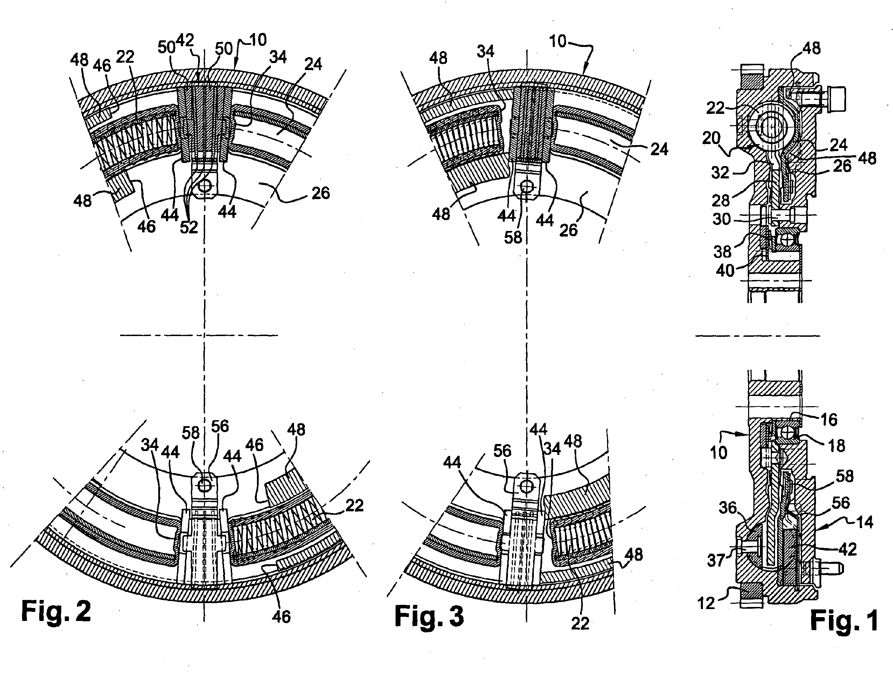

On se réfère d'abord aux figures 1 à 3, qui représentent un premier mode de réalisation de l'invention dans le cas d'un double volant amortisseur à ressorts circonférentiels. Dans ce type de double volant amortisseur, les frottements des ressorts sur les parois de leurs logements, sous l'effet de la force centrifuge, limitent de façon appréciable les chocs de fin de course.

Le double volant amortisseur de la figure 1 comprend un volant d'inertie primaire 10, monté fixement en bout d'un arbre moteur (non représenté) et portant une couronne de démarreur 12 à sa périphérie extérieure, un volant d'inertie secondaire 14 qui est centré et guidé en rotation sur un appendice axial 16 du volant primaire 10 au moyen d'un palier 18 formé par un roulement à billes, et un amortisseur de torsion 20 qui est monté entre les deux volants 10 et 14 et qui comprend des ressorts circonférentiels 22 logés pour partie dans une gorge ou un renfoncement annulaire du volant primaire 10 et pour partie dans des renfoncements circonférentiels 24 d'une pièce annulaire 26. La pièce annulaire 26 s'étend radialement entre les deux volants d'inertie, et plus précisément entre les ressorts 22 de l'amortisseur de torsion et le volant d'inertie secondaire 14. La pièce annulaire 26 est fixée au volant primaire 10 par exemple à sa périphérie externe et étant solidaire en rotation du volant primaire, en formant une rondelle de guidage de l'amortisseur 20 dont l'autre rondelle de guidage est formée par le volant primaire 10.

Un voile annulaire 28 est fixé à sa périphérie radialement interne par des rivets 30 sur la partie périphérique radialement interne du volant d'inertie secondaire 14 et s'étend radialement entre le volant primaire 10 et la pièce annulaire 26 pour coopérer avec les extrémités des ressorts 22 de l'amortisseur de torsion.

A cet effet, la partie périphérique radialement externe du voile annulaire 28 comporte des dents en saillie 32 qui sont en appui sur les extrémités des ressorts 22, dans un plan passant par l'axe des ressorts.

Les extrémités des ressorts 22 sont par ailleurs en appui de part et d'autre de ce plan sur les extrémités 34 des renfoncements 24 de la pièce annulaire 24 et sur des pièces 36 qui font saillie dans la gorge annulaire du volant primaire 10 et qui sont fixées à celui-ci par des rivets 37.

L'amortisseur de torsion 20 comprend encore des moyens de friction 38 qui sont agencés autour de l'appendice axial 16 entre les deux volants et qui comprennent une rondelle 40 entraînée en rotation par le volant secondaire 14 et serrée axialement entre une rondelle de friction portée par le volant primaire 10 et une rondelle élastique montée autour de l'appendice axial 16 en appui sur le roulement 18.

En fonctionnement, les vibrations et les à-coups générés par le moteur sont à l'origine de débattements angulaires entre les deux volants, qui sont absorbés par les ressorts 22 et amortis par les moyens de friction 38. Le frottement des ressorts 22 sur la paroi qui les entoure extérieurement, sous l'effet des forces centrifuges, participe également à l'amortissement de ces débattements angulaires.

Au passage par la fréquence de résonance, qui correspond notamment à une vitesse de rotation de l'arbre moteur inférieure au régime de ralenti, les débattements angulaires entre les volants ont une grande amplitude et une énergie élevée, de sorte que les ressorts 22 sont comprimés au maximum entre les fonds 34 des renfoncements 24 de la pièce annulaire 26 et les pièces 36 du volant primaire 10, d'une part, et les dents 32 du voile annulaire 28 d'autre part, sans absorber totalement ces débattements angulaires, ce qui provoque des chocs importants dans la transmission en aval du double volant amortisseur et peut détériorer ou détruire cette transmission.

Pour l'éviter, des butées d'amortissement de fin de course sont agencées entre les extrémités 34 de deux renfoncements consécutifs 24 de la pièce annulaire 26, de l'autre coté de cette pièce par rapport aux ressorts 22 de l'amortisseur de torsion, entre la pièce annulaire 26 et le volant secondaire 14.

Plus précisément, ces butées 42 sont installées entre des plaques 44 de répartition des pluies. Les plaques 44 sont interposées entre les extrémités 34 des renfoncements 24 et les butées 42. Elles s'étendent radialement de part et d'autre des renfoncements 24 sur une certaine distance de manière à coopérer avec des extrémités 46 de bossages 48 formés en saillie sur le volant secondaire 14 radialement de part et d'autre des renfoncements 24 de la plaque annulaire 26. Les extrémités 46 de ces bossages 48 sont écartées des plaques d'appui 44 dans la position de repos représentée schématiquement en figure 2 et viennent s'appliquer sur l'une ou l'autre des plaques 44 en fin de course, comme représenté schématiquement en figure 3.

Les butées 42 sont à structure feuilletée et comprennent une alternance de plaquettes 50 en matériau élastomère selon l'invention et de plaquettes rigides 52, par exemple en métal ou en matière plastique. Dans l'exemple représenté, les plaquettes 50 en matériau élastomère sont au nombre de quatre et les plaquettes rigides 52 au nombre de trois.

Une butée 42 à structure feuilletée comme représenté a une raideur beaucoup plus élevée qu'une butée monobloc de même volume en matériau élastomère selon l'invention et s'élargit beaucoup moins quand elle est comprimée entre les plaques 44. La butée 42 à structure feuilletée peut donc avoir au repos une surface frontale très nettement supérieure à celle d'une butée monobloc ou monocouche qui occuperait le même espace transversal à la compression maximale.

Chaque butée 42 est maintenue entre les extrémités 34 des renfoncements 24 de la plaque 26 par une languette 56 qui s'étend entre la plaque annulaire 26 et le volant secondaire 14 et qui est fixée d'une façon quelconque appropriée sur la plaque annulaire 26, par exemple au moyen d'une vis ou d'un rivet 58 faisant également office de pivot. En variante, la languette 56 peut être simplement accrochée sur la plaque annulaire 26 et/ou sur le volant primaire 10.

En fin de course d'un débattement angulaire maximal entre les deux volants, les extrémités 46 des bossages 48 du volant secondaire 14 viennent s'appliquer, d'un côté, sur une plaque de répartition 44 de chaque butée 42, comme représenté en figure 3. Elles compriment cette butée sur l'extrémité 34 d'un renfoncement 24 correspondant de la plaque annulaire 26. La compression maximale des butées 42 correspond à l'amortissement des chocs de fin de course au passage par la fréquence de résonance du double volant amortisseur.

Lorsque les butées 42 se déplacent de leur position de repos représentée en figure 2 à leur position de compression maximale représentée en figure 3, elles pivotent d'un angle faible autour des rivets 58 des languettes 56, dans un sens ou dans l'autre en fonction de la rotation relative entre les deux volants, l'une des plaques 44 étant poussée par les bossages 48 du volant secondaire, l'autre plaque 44 restant en appui sur l'extrémité 34 d'un renfoncement 24 de la plaque annulaire 26. Pour l'autre sens de rotation entre les deux volants, c'est l'autre plaque 44 qui est poussée en direction de la première, qui reste en appui sur l'extrémité du renfoncement 24 correspondant de la plaque annulaire 26.

Les butées 42 de ce mode de réalisation sont donc à action bidirectionnelle. Il suffit en général de disposer deux de ces butées dans des positions diamétralement opposées pour amortir les chocs de fin de course au passage par la fréquence de résonance. Les ressorts 22 de l'amortisseur de torsion peuvent s'étendre sur un peu moins de 180°, comme dans l'exemple de réalisation des figures 2 et 3, ou sur des étendues angulaires inférieures, par exemple d'environ 90°. Dans ce cas, on peut monter dans le double volant amortisseur quatre butées 42 réparties à 90° les unes des autres autour de l'axe de rotation.

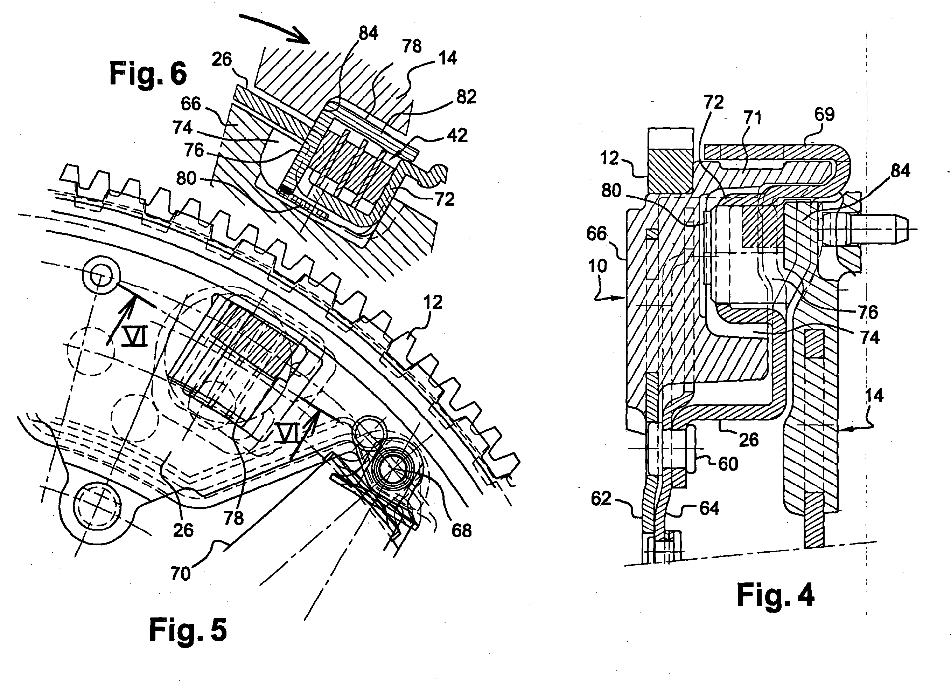

On se réfère maintenant aux figures 4 à 6 qui représentent un double volant amortisseur à ressorts radiaux selon l'invention. Dans ce type de double volant amortisseur, les ressorts de l'amortisseur de torsion sont en position radiale au repos et ne sont pas soumis au phénomène de frottement que l'on constate dans les doubles volants amortisseurs à ressorts circonférentiels. Les chocs de fin de course à la fréquence de résonance sont donc plus violents. L'utilisation de butée en un matériau apte à amortir efficacement les chocs est donc particulièrement cruciale.

Le volant primaire 10 fixé en bout de l'arbre moteur porte la couronne de démarreur 12 ainsi qu'une plaque annulaire 26 du type précité solidaire en rotation de ce volant 10. Le volant primaire 10 est ici un volant flexible, comprenant deux tôles annulaires accolées 62 et 64 dont l'une porte une masse d'inertie périphérique 66 et dont l'autre porte la plaque annulaire 26 au moyen de rivets 60 et porte également les axes d'articulation 68 de boîtes cylindriques 70 dans lesquelles sont logés les ressorts de l'amortisseur de torsion, d'une façon bien connue de l'homme du métier.

Comme on le voit en figure 4, la partie radialement extérieure 69 de la plaque annulaire 26 est repliée en U autour d'un rebord cylindrique 71 de la masse annulaire d'inertie 66 du volant primaire 10.

Entre les axes 68 d'articulation des boîtes cylindriques 70, la plaque annulaire 26 comporte des renfoncements 72 formés du côté de la masse annulaire d'inertie 66 et s'étendant eux-mêmes dans des renfoncements ou des cavités 74 de cette masse annulaire. Les renfoncements 72 servent de logement à des butées 42 de fin de course à structure feuilletée comme dans le mode de réalisation précédent, ces butées s'étendant circonférentiellement entre une extrémité d'un renfoncement 72 de la plaque annulaire 26 et une aile 76 d'une plaque coudée 78 interposée entre les deux volants et formant des moyens d'appui sur la butée 42.

L'aile 76 de la pièce coudée 78 s'étend axialement à travers une fente de la plaque annulaire 26 en direction du fond de la cavité 74 de la masse d'inertie 66. Elle comporte à son extrémité libre une plaquette soudée 80 s'étendant le long du fond du renfoncement 72. L'autre aile 82 de la plaque coudée 78 s'étend en direction circonférentielle parallèlement à la plaquette 80, le long du volant secondaire 14 et est guidée en translation à son extrémité libre sur la plaque annulaire 26.

La butée feuilletée 42, qui comprend, comme précédemment décrit, une alternance de couches en matériau élastomère selon l'invention et de plaquettes plus rigides en métal ou en matière plastique, est ainsi confinée entre la plaque coudée 78 et le renfoncement 72 de la plaque annulaire 26.

Un bossage 84 formé en saillie sur le volant secondaire 14 s'appuie sur une partie de la première aile 76 de la plaque coudée 78 qui s'étend entre la plaque annulaire 26 et le volant secondaire 14. Il permet de comprimer la butée 42 pour un sens de rotation du volant secondaire 14 par rapport au volant primaire 10, indiqué par la flèche en trait épais sur la figure 6.

En position de compression maximale, la butée 42 remplit tout l'espace disponible entre la plaque coudée 78 et le renfoncement 72 de la plaque annulaire 26.

Comme la butée 42 représentée aux figures 4 à 6 est à action unidirectionnelle, on peut disposer deux de ces butées de façon symétrique par rapport à l'axe d'articulation 68 représenté en figure 5. Une butée permet l'amortissement des chocs de fin de course pour un sens de rotation entre les deux volants et l'autre butée permet cet amortissement pour l'autre sens de rotation.

De préférence, on constitue des groupes de deux butées unidirectionnelles agissant chacune pour un des sens de rotation entre les deux volants. De préférence encore, deux de ces groupes sont disposés sensiblement diamétralement opposés l'un par rapport à l'autre.

Le guidage en translation de la plaque coudée 78 sur la plaque annulaire 26 au moyen de la plaquette soudée 80 et de l'aile 82 évite tout risque de coincement de cette plaque coudée dans une position oblique lors de la compression ou de la détente élastique de la butée 42.

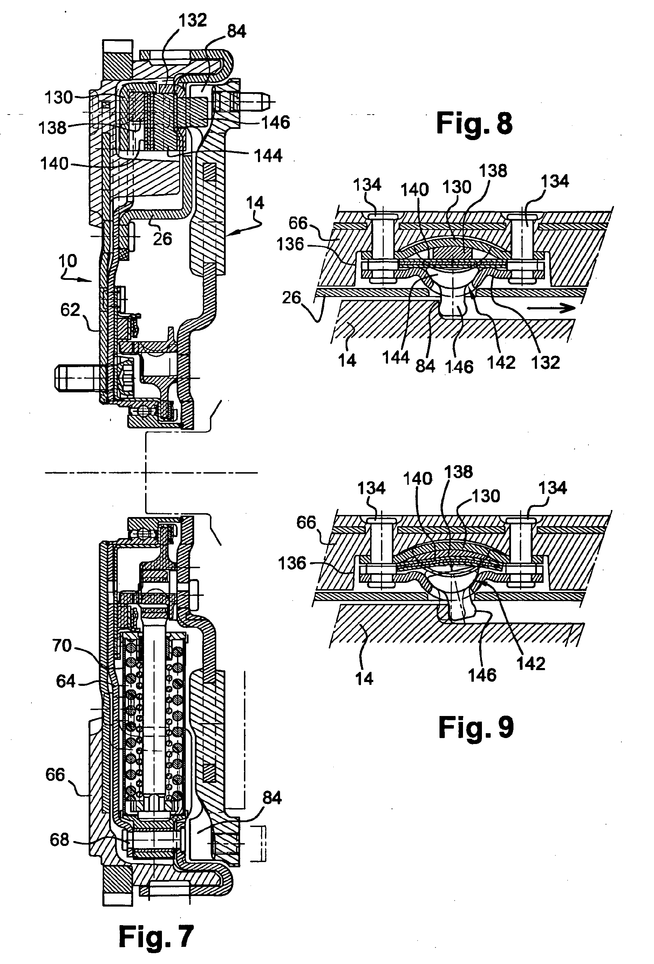

Les figures 7 à 10 concernent un autre exemple de double volant amortisseur à ressorts radiaux selon l'invention.

Ce double volant amortisseur comprend un volant primaire 10 du type flexible, qui comporte une tôle annulaire flexible 62 et une masse annulaire d'inertie 66 portée par la périphérie externe de la tôle annulaire flexible 62. Une autre tôle annulaire 64 s'étend le long de la première tôle annulaire flexible 62 et porte les axes 68 d'articulation des boîtes cylindriques 70 contenant les ressorts de l'amortisseur de torsion. La plaque annulaire 26 est fixée sur la tôle annulaire 64 et s'étend entre celle-ci et le volant secondaire 14 jusqu'à la périphérie radialement externe de la masse annulaire 66 du volant primaire 10, les axes d'articulation 68 des boîtes 70 des ressorts de l'amortisseur de torsion étant fixés par une extrémité sur la tôle 64 précitée et par leur autre extrémité sur la plaque annulaire 26.

Les butées d'amortissement de fin de course qui sont montées entre les deux volants comprennent chacune une capsule formée de deux plaques rigides 130 et 132 de forme convexe, qui sont disposées face à face et qui sont fixées ensemble à leurs extrémités sur la masse annulaire 66 du volant primaire par deux rivets 134, cet ensemble des deux plaques étant logé dans une cavité 136 de la masse d'inertie 66 recouverte par la plaque annulaire 26.

Entre les plaques 130 et 132 sont logés une butée élastiquement déformable 138 formée d'un bloc en matériau élastomère selon l'invention, des lames élastiques 140 en acier qui s'étendent sensiblement sur toute l'étendue de la capsule entre les rivets 134, et un organe basculant 142. L'organe basculant 142 comporte une embase 144 interposée entre les lames élastiques 140 et la plaque 132, et une tige 146 qui s'étend depuis l'embase 144 en direction du volant secondaire 14, à travers des orifices correspondants de la plaque 132 et de la plaque annulaire 26 (voir figure 8).

L'extrémité libre de la tige 146 coopère avec des épaulements ou bossages 84 du volant secondaire 14 qui sont de part et d'autre de la tige 146 de façon à agir sur cette tige dans un sens de rotation du volant 14 par rapport à la masse annulaire d'inertie 66 et dans le sens de rotation opposé.

L'embase 144 de l'organe basculant comporte une face plane appliquée sur les lames élastiques 140 et une face semi-cylindrique opposée, qui est en appui sur la face interne de la plaque convexe 132 et qui est guidée par celle-ci en rotation autour d'un axe sensiblement radial par rapport à l'axe de rotation du double volant amortisseur.

Quand le volant 14 tourne par rapport au volant 10 dans le sens indiqué par la flèche en figure 8, l'épaulement 84 situé à gauche de la tige 146 en figure 8 vient s'appliquer sur celle-ci et la fait pivoter autour de l'axe radial précité pour l'amener dans la position représentée en figure 9. Dans cette position, le bord droit de l'embase 144 fléchit les lames élastiques 140 et les pousse vers la plaque convexe 130, en comprimant la butée 138 entre les lames 140 et la plaque 130.

La position extrême de la tige 146 est définie par les bords de l'ouverture formée dans la plaque 132.

Dans l'autre sens de rotation du volant 14 par rapport au volant 10, le fonctionnement est identique à celui qui vient d'être décrit, la tige 146 étant basculée dans une position symétrique de celle représentée en figure 9 par rapport à la position de repos représentée en figure 8.

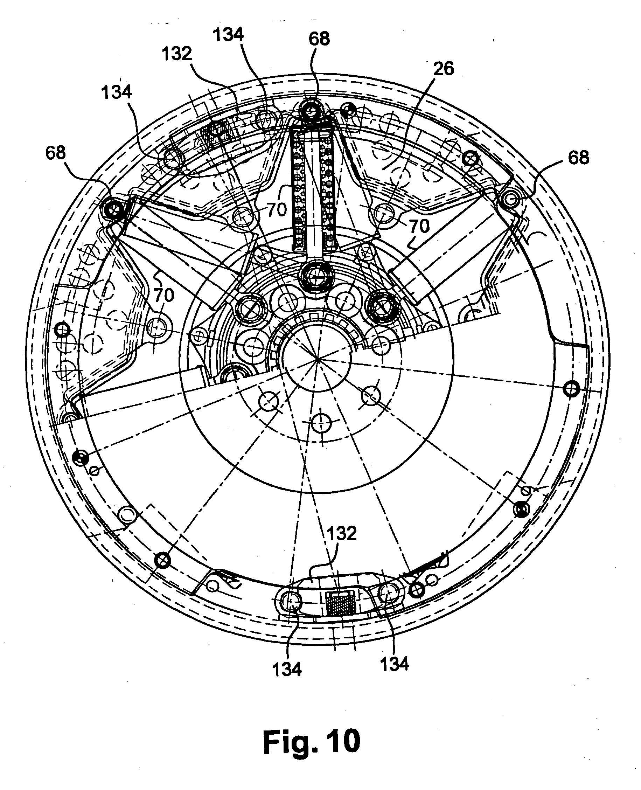

Le double volant amortisseur peut être équipé de deux de ces butées à action bidirectionnelle, comme représenté en figure 10. Les deux butées ne sont pas exactement dans des positions diamétralement opposées l'une par rapport à l'autre en raison du nombre impair de boîtes à ressorts 70 de l'amortisseur de torsion, qui sont réparties régulièrement autour de l'axe de rotation.

Le tableau 1 suivant résume le résultat d'essais effectués sur des butées de double volant amortisseur en différents matériaux. Les essais ont été effectués sur un double volant amortisseur équipé de deux groupes de deux butées unidirectionnelles agissant chacune pour un des sens de rotation entre les deux volants, ces groupes étant disposés sensiblement diamétralement opposés l'un par rapport à l'autre.

Dans une première série d'essais, chaque butée a reçu des chocs répétés de 20 J. On a relevé le nombre de ces chocs avant détérioration des butées.

Dans une deuxième série d'essais, les butées ont été soumises à des températures croissantes. On a relevé la température à partir de laquelle les propriétés des butées se dégradent.

L'Hytrel® est un polymère polyester thermoplastique fabriqué par la société Dupont.

L'Elastollan® un élastomère polyuréthanne thermoplastique fabriqué par la société BASF.

La silicone testée est un Elastosil®, fabriqué par Wacker.

**Tableau 1**

| | Nombre de chocs par butée avant endommagement | Température maximale d'utilisation |
|---|---|---|
| Hytrel® | 1 | 90°C |
| Elastollan® | 1 | 90°C |
| Caoutchouc naturel EPDM | Environ 450 | 120°C |
| Caoutchouc synthétique | Environ 450 | Environ 120°C |
| Silicone | Environ 500 | 200-250°C |
| VAMAC® G | ≥ 750 | ≥ 150°C |
| HNBR | ≥ 750 | 120°C |

Le tableau 1 montre l'intérêt du HNBR et du VAMAC, en particulier du VAMAC dans une application à une butée de fin de course d'un double volant amortisseur.

Bien entendu, la présente invention n'est pas limitée aux modes de réalisation décrits et représentés fournis à titre d'exemples illustratifs et non limitatifs.

Ainsi, la pièce d'amortissement selon l'invention ne présente pas nécessairement une structure feuilletée et peut être monobloc.

## Revendications

1. Pièce d'amortissement formant butée destinée à un double volant amortisseur, constituée, au moins en partie, par un matériau élastomère (50,138) **caractérisée en ce que** ledit matériau élastomère (50, 138) présente, suivant le test ASTM D2000, une résistance thermique supérieure à 125°C et un gonflement dans l'huile inférieur à 60 %.

2. Pièce d'amortissement selon la revendication 1, dans laquelle ledit matériau élastomère (50,138) présente, suivant le test ASTM D2000, une résistance thermique supérieure à 150°C et/ou un gonflement dans l'huile inférieur à 50 %.

3. Pièce d'amortissement selon l'une quelconque des revendications précédentes, dans laquelle ledit matériau élastomère (50,138) présente, suivant le test ASTM D2000, un résistance thermique supérieure ou égale à 175°C et/ou un gonflement dans l'huile inférieur à 45 %.

4. Pièce d'amortissement selon l'une quelconque des revendications précédentes, dans laquelle ledit matériau élastomère (50,138) est choisi dans le groupe formé par les fluoroélastomères, les caoutchoucs éthylènes acryliques, les élastomères perfluorés, les caoutchoucs acryliques, les caoutchoucs nitriles hydrogénés et leur mélanges.

5. Pièce d'amortissement selon l'une quelconque des revendications précédentes, présentant une structure feuilletée comprenant au moins deux couches (50) élastiquement déformables, au moins une desdites couches étant en ledit matériau élastomère, entre lesquelles est interposée au moins une lame (52) en un matériau plus rigide.

6. Double volant amortisseur, comprenant des volants d'inertie primaire (10) et secondaire (14) coaxiaux, supportés et centrés l'un sur l'autre au moyen d'un palier (18), et un amortisseur de torsion (20) agencé entre les volants pour les relier en rotation avec une possibilité de débattement angulaire entre les volants primaire et secondaire, **caractérisé en ce qu'**il comprend au moins une pièce d'amortissement (42) selon l'une quelconque des revendications précédentes.

7. Double volant selon la revendication 6, **caractérisé en ce que** ladite pièce d'amortissement formant butée (42) est agencée entre les volants pour amortir une fin de course dudit débattement angulaire.

8. Double volant selon la revendication 7, **caractérisé en ce que** la butée (42) est à action bidirectionnelle.

9. Double volant selon la revendication 7, **caractérisé en ce qu'**il comprend plusieurs dites butées (42), réparties de façon sensiblement régulière autour de l'axe de rotation des volants par groupes de deux, chaque groupe comprenant une butée agissant dans un sens de rotation et une butée agissant dans l'autre sens de rotation.

## Claims

1. Damping part which forms a stop and is designed for a double damping flywheel, constituted at least partly by an elastomer material (50, 138), **characterised in that**, according to the test ASTM D2000, the said elastomer material (50, 138) has thermal resistance greater than 125°C and swelling in oil of less than 60%.

2. Damping part according to claim 1, wherein, according to the test ASTM D2000, the said elastomer material (50, 138) has thermal resistance greater than 150°C and/or swelling in oil of less than 50%.

3. Damping part according to either of the preceding claims, wherein, according to the test ASTM D2000, the said elastomer material (50, 138) has thermal resistance greater than, or equal, to 175°C and/or swelling in oil of less than 45%.

4. Damping part according to any one of the preceding claims, wherein the said elastomer material (50, 138) is selected from the group formed by fluoroelastomers, acrylic ethylene rubbers, perfluorinated elastomers, acrylic rubbers, hydrogenated nitrile rubbers and their mixtures.

5. Damping part according to any one of the preceding claims, with a laminated structure comprising at least two resiliently deformable layers (50), at least one of the said layers being made of the said elastomer material, between which at least one strip (52) made of a more rigid material is interposed.

6. Double damping flywheel, comprising primary (10) and secondary (14) coaxial inertia flywheels, which are supported and centred on one another by means of a bearing (18), and a torsion damper (20) which is arranged between the flywheels in order to connect them in rotation with a possibility of angular movement between the primary and secondary flywheels, **characterised in that** it comprises at least one damping part (42) according to any one of the preceding claims.

7. Double flywheel according to claim 6, **characterised in that** the said damping part which forms a stop (42) is arranged between the flywheels in order to damp an end of travel of the said angular movement.

8. Double flywheel according to claim 7, **characterised in that** the stop (42) has two-way action.

9. Double flywheel according to claim 7, **characterised in that** it comprises a plurality of the said stops (42) which are distributed substantially regularly around the axis of rotation of the flywheels in groups of two, each group comprising a stop which acts in one direction of rotation, and a stop which acts in the other direction of rotation.

## Patentansprüche

1. Anschlagpuffer für ein Zweimassen-Dämpfungs-Schwungrad, zumindest teilweise gebildet aus einem Elastomer-Material (50, 138), **dadurch gekennzeichnet, dass** das Elastomer-Material (50, 138) gemäß dem Prüftest ASTM D2000 eine Wärmebeständigkeit von über 125° C und in Öl eine Quellung von unter 60% aufweist.

2. Puffer nach Anspruch 1, wobei das Elastomer-Material (50, 138) gemäß dem Prüftest ASTM D2000 eine Wärmebeständigkeit von über 150° C und/oder in Öl eine Quellung von unter 50% aufweist.

3. Puffer nach einem der vorherigen Ansprüche, wobei das Elastomer-Material (50, 138) gemäß dem Prüftest ASTM D2000 eine Wärmebeständigkeit von über oder gleich 175° C und/oder in Öl eine Quellung von unter 45% aufweist.

4. Puffer nach einem der vorherigen Ansprüche, wobei das Elastomer-Material (50, 138) aus der Gruppe ausgewählt ist, die aus den Fluor-Elastomeren, den Ethylen- Acryl-Kautschuken, den Perfluor-Elastomeren, den Acryl-Kautschuken, den wasserstoffhaltigen Nitril-Kautschuken und ihren Mischungen besteht.

5. Puffer nach einem der vorherigen Ansprüche, der eine Verbund-Struktur aufweist, die mindestens zwei elastisch verformbare Schichten (50) umfasst, wobei zumindest eine dieser Schichten aus dem Elastomer-Material besteht, zwischen denen zumindest ein Streifen (52) aus einem starreren Material eingefügt ist.

6. Zweimassen-Dämpfungs-Schwungrad, umfassend ein Primär-Schwungrad (10) und ein koaxiales Sekundär- Schwungrad (14), die durch ein Lager (18) relativ zueinander zentriert und geführt sind, und einen zwischen den Schwungrädern angeordneten Torsionsdämpfer (20), um diese mit der Möglichkeit einer Winkelauslenkung zwischen dem Primär-Schwungrad und dem Sekundär-Schwungrad rotatorisch miteinander zu verbinden, **dadurch gekennzeichnet, dass** es zumindest einen Puffer nach einem der vorherigen Ansprüche aufweist.

7. Zweimassen-Schwungrad nach Anspruch 6, **dadurch gekennzeichnet, dass** der Anschlagpuffer (42) zwischen den Schwungrädern angeordnet ist, um ein Ende des Weges der Winkelauslenkung zu puffern.

8. Zweimassen-Schwungrad nach Anspruch 7, **dadurch gekennzeichnet, dass** der Anschlagpuffer (42) in zwei Richtungen wirksam ist.

9. Zweimassen-Schwungrad nach Anspruch 7, **dadurch gekennzeichnet, dass** es mehrere Anschläge (42) umfasst, die in Zweiergruppen in etwa gleichmäßig um die Rotationsachse der Schwungräder herum verteilt sind, wobei jede Gruppe einen Anschlag, der in einer Rotationsrichtung agiert, und einen Anschlag, der in der anderen Rotationsrichtung agiert, umfasst.
